# EUROPEAN PATENT APPLICATION

(11) **EP 2 314 631 A2**
(43) Date of publication of application: **27.04.2011**
(21) Application number: 10193917.1
(22) Date of filing: 22.03.2005
(51) Int. Cl.: C08B 37/10, C07H 3/06, C12Q 1/527

(54) **Method for detection and quantification of glycoserine in a sample of heparin or heparin products**

(30) Priority: 24.03.2004 EP 04290791
(62) Divisional of application: 05716563.1
(71) Applicant: Aventis Pharma S.A., 92160 Antony (FR)
(72) Inventor: Mourier, Pierre, 75013, PARIS (FR); Viskov, Christian, 75013, PARIS (FR)
(74) Representative: Romanowski, Caroline

(57) **Abstract**

The invention relates to a process for oxidizing unfractionated heparins, and to a method for determining the glycoserine content of a sample of a heparin or a heparin product, comprising depolymerizing the sample with at least one heparinase and analyzing the sample using a chromatography process to detect the presence or absence of glycoserine and/or oxidized glycoserine residues in the sample, wherein said chromatography process detects acetylated groups.

## Description

One embodiment of the present invention relates to a process for oxidizing crude heparin preparations using at least one permanganate salt chosen from potassium permanganate, sodium permanganate, and quaternary ammonium permanganate. The resulting heparin preparations are relatively free of glycoserine residues and are useful, for example, for preparing low molecular weight heparins (LMWHs) and ultra-low molecular weight heparins (ULMWHs) that are relatively free of glycoserine residues. Another embodiment of the invention relates to a method for detecting the presence of glycoserine and glycoserine derivatives in preparations of heparin and of fragmented heparin.

Heparins are biologically active members of the glycosaminoglycan family and can be extracted from, e.g., bovine and porcine sources. Heparins have anticoagulant and antithrombotic properties that make them useful in treatment of thromboses, such as arterial and venous thromboses. As isolated, natural heparin molecules have a high anticoagulant activity, which can lead to hemorrhaging. Moreover, heparin molecules are sensitive to particular serum factors and, consequently, must be administered in large doses to provide antithrombotic benefits greatly increasing the risk of hemorrhaging.

LMWH fragments may be prepared by various processes from heparin: fractionation by means of solvents (FR 2,440,376, U.S. Pat. No. 4,692,435); fractionation on an anionic resin (FR 2,453,875); gel filtration (Barrowcliffe, Thromb. Res. 12, 27-36 (1977)); affinity chromatography (U.S. Pat. No. 4,401,758); controlled depolymerization by means of a chemical agent including, but not limited to, nitrous acid (EP 14184, EP 37319, EP 76279, EP 623629, FR 2,503,714, U.S. Pat. No. 4,804,652; WO 813276), beta-elimination from a heparin ester (EP 40144, U.S. Pat. No. 5,389,618), periodate (EP 287477), sodium borohydride (EP 347588, EP 380943), ascorbic acid (U.S. Pat. No. 4,533,549), hydrogen peroxide (U.S. Pat. No. 4,629,699, U.S. Pat. No. 4,791,195), quaternary ammonium hydroxide from a quaternary ammonium salt of heparin (U.S. Pat. No. 4,981,955), alkali metal hydroxide (EP 380943, EP 347588), by an enzymatic route (EP 64452, U.S. Pat. No. 4,396,762, EP 244235, EP 244236; U.S. Pat. No. 4,826,827; U.S. Pat. No. 3,766,167), or by means of irradiation (EP 269981). See also U.S. Patent No. 4,303,651 and U.S. Patent No. 4,757,057. The resultant LMWH mixtures are reported to demonstrate higher antithrombotic activity, due to high anti-factor Xa (aXa) activity, and a lower anti-factor IIa (aIIa) activity, than unfractionated heparin, and are often more desirable mixtures for administration to a patient in need of treatment for thromboses.

Each LMWH manufacturer of an approved product utilizes a distinct process of depolymerization. Unless two manufacturers use the same process, this process distinctness results in LMWHs with distinct chemical structures and, therefore, differing pharmacological activity and different approved indications for clinical use.

Therefore, LMWHs are structurally differentiated by the depolymerization processes used for their manufacture (R.J. Linhardt, et al, Seminars in Thombosis and Hemostatis 1999; 25(3 Supp.): 5-16). As a result, LMWHs are more heterogeneous than heparin. Each different process causes unique and highly complex structural modifications to the polysaccharide chains. These modifications include differences in chain lengths and chain sequences, as well as structural fingerprints. Consequently, the different commercial LMWHs each have distinctive pharmacological profiles and different approved clinical indications.

During the process for preparing enoxaparin sodium, sold under the tradename Lovenox^{®} in the US and Clexane^{®} in some other countries, from pure heparin, the aqueous-phase alkaline depolymerization process produces a partial but characteristic conversion of the glucosamines of the reducing ends of the oligosaccharide chains.

The first step of this conversion consists of a glucosamine ↔ mannosamine epimerization (T. Toida, et al., J. Carbohydrate Chemistry, 15(3), 351-360 (1996)); the second step is a 6-O-desulfation of the glucosamine, leading to the formation of derivatives called "1,6 anhydro" (International patent application WO 01/29055).

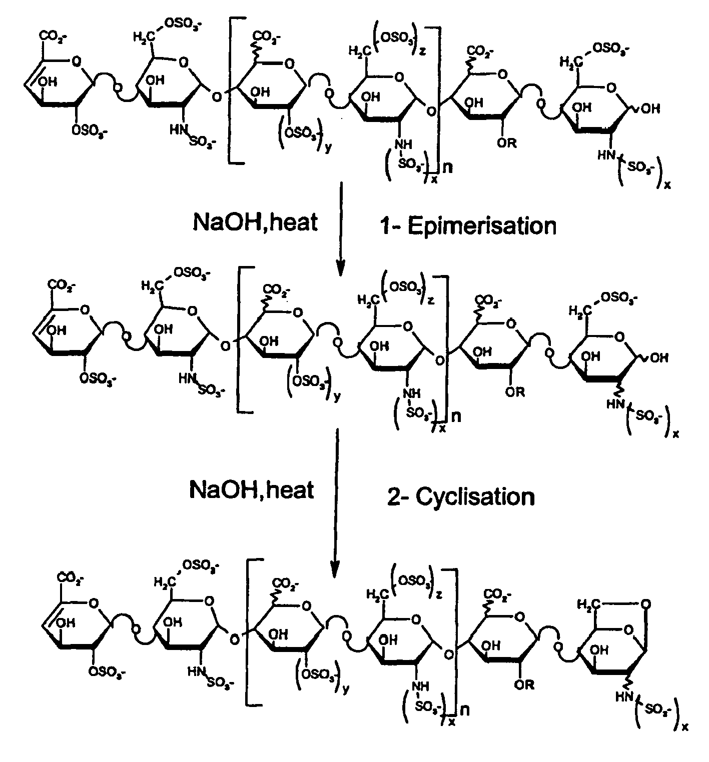

This type of derivative is obtained for oligosaccharide chains whose terminal glucosamine is 6-O-sulfated.

The percentage of oligosaccharide chains whose end is modified with a 1,6-anhydro bond is a structural characteristic of the oligosaccharide mixture of Lovenox^{®} enoxaparin sodium. Based on current knowledge, between 15% and 25% of the components of Lovenox^{®} (enoxaparin sodium) have a 1,6-anhydro structure at the reducing end of their chain.

Recently, new processes for the preparation of heparin fragments employing depolymerization in the presence of a strong base have yielded ultra-low molecular weight heparins having a weight average molecular weight ranging from approximately 1500 to approximately 3000 Daltons (ULMWHs) as described, e.g., in U.S. Published Patent Application No. 2002- 0055621 A1, specifically incorporated by reference herein.

Compositions of LMWH and ULMWH fragments are heterogeneous and contain individual heparin fragments of varying lengths and molecular weights.

Both heparin itself and heparin fragment mixtures have limited shelf lives, at least in part, because they become colored during storage. Once they develop a color, those compositions may not be commercially desirable for injection into patients. A process that yields heparin that resists coloration is therefore highly desirable for commercial reasons. Such coloration-resistant heparin can, of course, be used to prepare coloration-resistant LMWHs and/or ULMWHs by methods known to those skilled in the art. Moreover, a method for assessing the potential of heparin preparations to colorize would be useful in the manufacture of heparin, LMWH, and ULMWH.

It is accordingly an embodiment of the invention to provide a process for preparing heparin that is resistant to coloration. The resulting heparin may subsequently be employed to produce LMWH and ULMWH mixtures, particularly commercially available mixtures, such as fraxiparin, fragmin, innohep (or logiparin), normiflo, embollex (or sandoparin), fluxum (or minidalton), clivarine, and hibor, that are resistant to coloration. As will be evident herein, certain embodiments of the invention can utilize enoxaparin, sold commercially as Lovenox^{®} (enoxaparin sodium)in the US and Clexane^{®} (enoxaparin sodium) in some other countries. Enoxaparin is commercially available from Aventis Pharma S.A. and Aventis Pharmaceuticals, Inc. Other embodiments do not utilize enoxaparin. Another embodiment of the invention is to provide a method for monitoring the tendency of heparin and mixtures of heparin fragments to color.

One embodiment of the invention provides a novel process for preparing heparin using at least one permanganate salt chosen from potassium permanganate, sodium permanganate, and quaternary ammonium permanganate, such as potassium permanganate, in a heparin oxidation process to produce glycoserine-free heparinic compositions. That process is described below. The applicant has discovered that if at least one of those permanganates salts, such as potassium permanganate, is utilized in the oxidation step, glycoserine-free or low glycoserine heparin is obtained. It was also discovered that removing the glycoserine residues and/or glycoserine derivatives from heparin can lead to products with improved commercial characteristics. Those reduced-glycoserine products are colorless or nearly colorless and show a decreased tendency to colorize relative to products made with heparin that has not been oxidized in the presence of potassium permanganate.

Additionally, at least one embodiment of the present invention includes a method for detecting glycoserine residues (or the lack thereof) in heparin compositions. This method includes pre-treatment of the heparin with one or more heparinases and detection of the acetylated groups using chromatography. Further detailed descriptions of the present invention are provided below.

In accordance with the invention, conditions are provided that permit the chemoselective elimination of glycoserine residues and glycoserine derivatives, such as oxidized glycoserines, from heparin.

In one embodiment of the invention, at least one permanganate salt chosen from potassium permanganate, sodium permanganate, and quaternary ammonium permanganate, such as potassium permanganate is used in a heparin oxidation process comprising oxidation with about 4% to about 10% by weight relative to the heparin of said at least one permanganate salt so as to obtain a low glycoserine or glycoserine-free heparin. If the resulting low glycoserine or glycoserine-free heparin is depolymerized using methods known in the art, low glycoserine or glycoserine-free LMWHs or ULMWHs such as, fraxiparin, fragmin, innohep (or logiparin), normiflo, embollex (or sandoparin), fluxum (or minidalton), clivarine, and hibor may be obtained, but not enoxaparin sodium.

Commercial processes, however, for manufacturing those commercial products are believed to contain proprietary details that, at least in the case of enoxaparin, can affect the biological properties of the final product, as explained in February 19, 2003, Citizen Petition and Citizen Petition Supplement (03P-0064/CP1) filed on behalf of Aventis Pharmaceuticals Inc., a subsidiary of Aventis SA, the assignee and publicly available from the United States Food and Drug Administration (USFDA).

Hence an embodiment of the invention relates to a process for preparing at least one decolorized heparin product chosen from fraxiparin, fragmin, innohep (logiparin), normiflo, embollex (sandoparin), fluxum (minidalton), clivarine, and hibor from heparin comprising:
a) purification of the heparin by oxidation with about 4% to about 10% by weight relative to the heparin of at least one permanganate salt chosen from potassium permanganate, sodium permanganate, and quaternary ammonium permanganate, wherein oxidation occurs at a temperature ranging from approximately 35°C to approximately 90°C; and
b) depolymerization by a manufacturer of the oxidized heparin according to a process to obtain said heparin product.

Alternatively, the manufacturer can depolymerize heparin oxidized with about 4% to about 10% by weight relative to the heparin of at least one permanganate salt chosen from potassium permanganate, sodium permanganate, and quaternary ammonium permanganate, wherein oxidation occurs at a temperature ranging from approximately 35°C to approximately 90°C according to a process to obtain said heparin product

Regarding enablement, a manufacturer of one of the commercial products recited in this aspect of the invention will be able to practice these embodiments of the invention.

In general, and not necessarily with respect to commercial processes, suitable methods for depolymerization are disclosed, for example, in FR 2,440,376, U.S. Pat. No. 4,692,435, FR 2,453,875, Barrowcliffe, Thromb. Res. 12, 27-36 (1977), U.S. Pat. No. 4,401,758, EP 14184, EP 37319, EP 76279, EP 623629, FR 2,503,714, U.S. Pat. No. 4,804,652, WO 813276, EP 40144, U.S. Pat. No. 5,389,618, EP 287477, EP 347588, EP 380943, U.S. Pat. No. 4,533,549, U.S. Pat. No. 4,629,699, U.S. Pat. No. 4,791,195, U.S. Pat. No. 4,981,955, EP 380943, EP 347588, EP 64452, U.S. Pat. No. 4,396,762, EP 244235, EP 244236, U.S. Pat. No. 4,826,827, U.S. Pat. No. 3,766,167, EP 269981, U.S. Patent No. 4,303,651, U.S. Patent No. 4,757,057, and U.S. Published Patent Application No. 2002- 0055621 A1, all of which are incorporated herein for their disclosure of such methods, except that U.S. Pat. No. 5,389,618 is incorporated only as presently amended in the concurrent reissue proceeding.

Another subject of the invention is the use of at least one of the permanganate salt, such as potassium permanganate, in the heparin oxidation process described above, i.e., oxidation with about 4% to about 10% by weight relative of said to the heparin of said at least one of the permanganate salts to obtain a heparin that is decolorized. If the resulting decolorized heparin is depolymerized, decolorized heparin products including LMWHs or ULMWHs such as fraxiparin, fragmin, innohep (or logiparin), normiflo, embollex (or sandoparin), fluxum (or minidalton), clivarine, and hibor might be obtained, subject to the comment on commercial processes made above.

Another subject of the invention is the use of potassium permanganate in the heparin oxidation process described above to obtain a heparin that is low glycoserine or glycoserine-free and decolorized. If the resulting low glycoserine or glycoserine-free and decolorized heparin is depolymerized, decolorized heparin products including LMWHs or ULMWHs such as fraxiparin, fragmin, innohep (or logiparin), normiflo, embollex (or sandoparin), fluxum (or minidalton), clivarine, and hibor might be obtained, as explained above.
In the present invention, the phrase "heparin" means all forms of heparin other than a heparin product, including without limitation crude heparin, upgraded heparin and purified heparin.
In the present invention, the phrase "upgraded heparin" means heparin having an increased anti Xa activity compared to the starting heparin prior to upgrading. For example, and without limitation, if the anti Xa activity of the starting heparin is 140 IU/mg, the upgraded heparin may have an anti Xa activity of 150lU/mg or 200 lU/mg.
In the present invention, the phrase "low molecular weight heparin" or "LMWH" means a mixture of polysaccharides obtained from heparin and having a weight average molecular weight greater than approximately 3,000 Daltons and less than approximately 10,000 Daltons..
In the present invention, the phrase "ultra-low molecular weight heparin" or "ULMWH" means a mixture of polysaccharids obtained from heparin having a weight average molecular weight ranging from approximately 1500 to approximately 3000 Daltons.

In the present invention, the phrase "depolymerization" (and variations thereof such as depolymerize or depolymerizing) includes all types of depolymerization, including without limitation fragmentation, chemical and enzymatic depolymerization, and other methods of preparing fragments of heparin, including without limitation fractionation.

In the present invention, the phrase "low glycoserine" means a glycoserine (such as, for example, as illustrated below at paragraph 59) percent less than or equal to 0.3% of all disaccharide residues in the sample have a glycoserine attached.

In the present invention, the phrase "glycoserine-free" means a glycoserine (such as, for example, as illustrated below at paragraph 59) percent less than or equal to 0.1 % of all disaccharide residues in the sample have a glycoserine attached

In the present invention, the phrase "relatively glycoserine-free" means a glycoserine (such as, for example, as illustrated below at paragraph 59) percent less than or equal to 0.3 % of all disaccharide residues in the sample have a glycoserine attached.

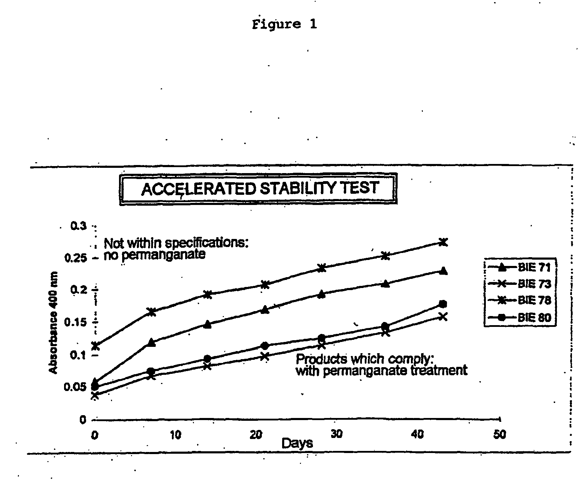

In the present invention, the phrase "decolorized" means less than or equal to 0.2 absorbance units in an accelerated stability test such as that described below under the heading "Preparation for colorimetric analysis of the sample." Figure 1 reflects the results of an accelerated stability test for enoxaparin sodium.

In the present invention, the phrase "coloration" means greater than 0.2 absorbance units in an accelerated stability test such as that described below under the heading "Preparation for colorimetric analysis of the sample." Figure 1 reflects the results of an accelerated stability test for enoxaparin sodium.

In the present invention, the phrase "coloration-resistant" means less than or equal to 0.2 absorbance units in an accelerated stability test such as that described below under the heading "Preparation for colorimetric analysis of the sample." Figure 1 reflects the results of an accelerated stability test for enoxaparin sodium.

In the present invention, the phrase "heparin product" means LMWHs and ULMWHs.

In one embodiment of the process of the invention, 4 to 10% by weight relative to the heparin of at least one permanganate chosen from potassium permanganate, sodium permanganate, and quaternary ammonium permanganate, such as potassium permanganate, is used for preparing heparins purified by oxidation. In a related embodiment, approximately 8 % by weight relative to the heparin of potassium permanganate is used in a process for preparing heparins purified by oxidation.

In another embodiment of the invention, the process for preparing heparins purified by oxidation with at least one permanganate salt chosen from potassium permanganate, sodium permanganate, and quaternary ammonium permanganate, such as potassium permanganate, is performed at a temperature ranging from approximately 35°C to approximately 90°C. In a related embodiment, the process for preparing heparins purified by oxidation with potassium permanganate is performed at a temperature from approximately 40°C to approximately 80°C.

An additional subject of the invention is at least one composition chosen from low glycoserine, glycoserine-free, and decolorized LMWHs and ULMWHs, exclusive of products approved by the USFDA as of the filing date of this application, which can be obtained according to a process comprising the following steps:
a) purification of the heparin by the action of 4 to 10 % by weight relative to the heparin of at least one permanganate salt chosen from potassium permanganate, sodium permanganate, and quaternary ammonium permanganate, such as potassium permanganate, wherein oxidation occurs at a temperature ranging from approximately 35°C to approximately 90°C ;
b) depolymerization of the heparin; and
c) optionally, purification of the at least one composition.

An additional subject of the invention is at least one composition chosen from low glycoserine, glycoserine-free, and decolorized LMWHs and ULMWHs, exclusive of products approved by the USFDA as of the filing date of this application, which can be obtained according to a process comprising depolymerizing heparin oxidized by the action of 4 to 10% by weight relative to the heparin of at least one permanganate salt chosen from potassium permanganate, sodium permanganate, and quaternary ammonium permanganate, wherein oxidation occurs at a temperature ranging from approximately 35°C to approximately 90°C.

An additional subject of the invention is a method for determining the glycoserine content of a sample of a heparin or a heparin product, including, but not limited to, LMWH and ULMWH and commercially available forms thereof, comprising:
a) treating a sample chosen from heparins and heparin products; and
b) thereafter, using a chromatography process for determining the presence of glycoserine residues in the sample.

In one embodiment of the invention, the sample chosen from heparins and heparin products is treated by depolymerization through the action of a heparinase before it is analyzed in the chromatography process. In another embodiment, the sample chosen from heparins and heparin products is depolymerized by the action of a mixture of heparinases. For instance, the mixture of heparinases may comprise heparinase 1 (EC 4.2.2.7.), heparinase 2 (heparin lyase II), and heparinase 3 (EC 4.2.2.8.).

In another embodiment of the invention, anion-exchange chromatography (SAX - Strong Anionic Exchange) is used for determining the presence (or absence) of glycoserine in the sample after the sample is treated. In a related embodiment of the invention, the stationary phase for anion-exchange chromatography is grafted with quaternary ammonium derivatives, including, for example, -NMe3+. As used herein, the term "strong anion exchange chromatography" (SAX) encompasses anion exchange chromatography conducted on any resin that maintains a constant net positive charge in the range of about pH 2-12. In certain embodiments of the invention, strong anion exchange chromatography uses a solid support functionalized with quaternary ammonium exchange groups. For example, columns such as Spherisorb® SAX (Waters Corp, Milford MA) may be used having particle size of about 5 µm, a column length of about 25 cm and a column diameter of between about 1 mm and about 4.6 mm may be used. In another embodiment, CTA-SAX chromatography may be used, as desribed in the U.S. Patent Application entitled "Method for Determining Specific Groups Constituting Heparins or Low Molecular Weight Heparins" filed with the USPTO on even date herewith and hereby incorporated herein by reference solely for references to CTA-SAX chromatography. CTA-SAX chromatography is defined in said application as anion exchange chromatography conducted on a quaternary ammonium salt dynamically coated on a reversed phase silica column that maintains a constant net positive charge in the range of about pH 2 to about pH 12.

An embodiment of the present invention thus provide a method for quantifying the glycoserine content of a sample of a heparin or heparin product by analyzing the sample for glycoserine content. In one embodiment, analysis of the sample includes enzymatically digesting the sample and quantifying the content of the glycoserine residues in the digested sample by chromatography methods such as HPLC. In a related embodiment, CTA-SAX or SAX may be utilized to quantify the content of glycoserine residues. For example, and without limitation, the glycoserine content of the sample may be reduced below 2.0 % of the sample, below 0.3 % of the sample, or below 0.1 % of the sample. The glycoserine content of the sample may also be 0.0 % (i.e., undetectable).

In one embodiment of the method for determining the glycoserine content of a sample of a heparin or a heparin product, the mobile phase for the chromatography step is transparent to ultraviolet (UV) light in a range from about 200 nm to about 400 nm. The mobile phase may comprise, for example, sodium perchlorate, methanesulfonate salts, or phosphate salts.

In one embodiment of the method for determining the glycoserine posttreatment content of a sample chosen from heparins and heparin products, polysaccharides are detected by their UV absorption following chromatography. The UV absorption of the polysaccharides may be measured at two wavelengths for example, 202 nm and 240 nm, following chromatography so that the absorption signals of non-acetylated polysaccharides cancel out.

Another embodiment of the method provides a method for monitoring the glycoserine content of a sample of a heparin or a heparin product comprising:
a) removing and/or diminishing glycoserine and/or oxidized glycoserine residues from the sample; and
b) analyzing the sample using a chromatography process to detect the presence or absence of glycoserine and/or oxidized glycoserine residues in the sample.
In a related embodiment, removing and/or diminishing glycoserine and/or oxidized glycoserine residues comprises
a) purification of the heparin by oxidation with about 4% to about 10% by weight relative to the heparin of at least one permanganate salt chosen from potassium permanganate, sodium permanganate, and quaternary ammonium permanganate, wherein oxidation occurs at a temperature ranging from approximately 35°C to approximately 90°C.; and
b) depolymerization of the oxidized heparin.

In an additional embodiment of the invention, the glycoserine content of a sample chosen from heparins and heparin products may be quantified, for example, either by external calibration or internal calibration. Internal calibration can comprise the use of an internal standard such as 2-naphthol-3, 6-disulfonic acid. In another related embodiment, the solution to be assayed may contain about 0.15 g/l of 2-naphthol-3, 6-disulfonic acid.

Another embodiment of the method provides a method of predicting the tendency of a heparin or a heparin product to colorize, comprising measuring the glycoserine content of said heparin or heparin product. In a related embodiment, the glycoserine content is quantified by external or internal calibration. The internal calibration may comprise the use of an internal standard. In a related embodiment, the internal standard is 2-naphthol-3, 6-disulfonic acid or about 0.15 g/l of 2-naphthol-3, 6 disulfonic acid.

In one embodiment of the invention, the chromatography step detects the tetrasaccharide of the glycoserine- linking domain of heparin molecules. The tetrasaccharide of the glycoserine- linking domain of heparin is:

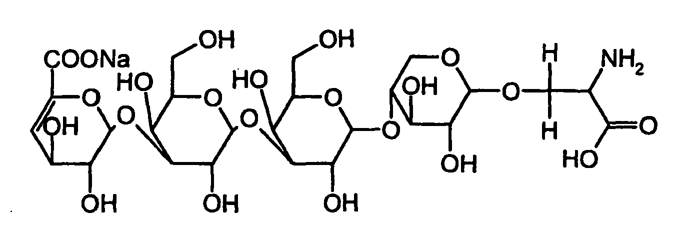

One skilled in the art will appreciate that this method and the aspects described herein may be used to determine the glycoserine content of LMWHs and ULMWHs known in the art, as well as those available commercially. Additional advantages of the invention are set forth in part in the description that follows, and in part will be obvious from the description, or discernible to one of ordinary skill practicing the invention. The advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

Likewise, the accompanying drawings, which are incorporated in and constitute a part of this specification, illustrate several embodiments of the invention and together with the description, serve to explain the principles of the invention.
Figure 1 illustrates accelerated stability tests of non-permanganate treated and permanganate treated enoxaparin sodium, commercially available as described above.
Figure 2 is a chromatogram representative of a depolymerized heparin material.
Figure 3 is a UV spectrum illustrating a method for the selective detection of acetylated sugars.

The NMR of the tetrasaccharide GlcA-Gal-Gal-Xyl-Ser (peak n°1)shows a spectrum in D₂O, 500MHz(δ in ppm) as follows: 3.30 (1 H, t, 7Hz), 3.34 (1 H, t, 8Hz), 3.55 (1 H, t, 7Hz), 3.60 (1 H, t, 7Hz), between 3.63 and 3.85 (10H, unresolved peak), 3.91 (2H, unresolved peak), 3.96 (1H. dd, 7 and 2Hz), between 4.02 and 4.10 (3H, unresolved peak), 4.12 (1H, d, 2Hz), 4,18 (1H, unresolved peak), 4.40 (1H, d, 6Hz), 4.46 (1H. d, 6Hz), 4.61 (1H. d, 6Hz), 5.29 (1 H, d, 3Hz), 5.85 (1H. d, 3Hz).

Reference will now be made in detail to exemplary embodiments of the invention, which are illustrated in the accompanying drawings.

The presence of glycoserine residues in preparations of heparin, LMWH, and ULMWH may cause quality and stability problems that decrease the commercial value of the product. For example, in enoxaparin stability tests, glycoserine residues increase the rate of coloration and may lead to product batches that are not within approved manufacturing specifications. See Figure 1. Controlling the amount of glycoserine in heparin makes it possible to better standardize the resulting commercial products, including LMWHs, and ULMWHs. As a consequence, the risk of producing product batches that cannot be sold may be decreased.

It has been demonstrated that the action of at least one of the permanganate salts mentioned herein, such as potassium permanganate, makes it possible to selectively cleave the glycoserine residue in the heparin chain. Moreover, the sites of action of permanganate, the mechanism of action of permanganate, and the structures resulting from permanganate action have been characterized.

Consequently, a subject of the invention is glycoserine-free, decolorized heparin and a process for preparing glycoserine-free, decolorized heparin, comprising the following steps:
a) treatment of the heparin with from about 4% to about 10% relative to the weight of the heparin of at least one permanganate chosen from potassium permanganate, sodium permanganate, and quaternary ammonium permanganate, such as potassium permanganate, at a temperature ranging from approximately 35°C to approximately 90°C according to the process as described above; and
b) purification of the glycoserine-free, decolorized heparin.

In one embodiment, the temperature ranges from about 40°C to about 80°C. In this range, 8 % relative to the weight of the heparin of permanganate treatment maintains its effectiveness in eliminating glycoserine residues. And at permanganate concentrations equal to or greater than 4 % relative to the weight of the heparin of permanganate at a temperature of approximately 80°C, treatment according to the invention virtually eliminates detectable glycoserine residues. Below 4 % relative to the weight of the heparin of permanganate, the treatment may no longer be sufficient to eliminate glycoserine residues (as seen in example 9 below). In fact, the concentration of potassium permanganate used in the oxidation step is more important than temperature in reducing or eliminating glycoserine residues.

Heparin prepared according to the invention may in tum be used to prepare other glycoserine-free and decolorized heparin products, for example; fraxiparin, enoxaparin, fragmin, innohep (or logiparin), normiflo, embollex (or sandoparin), fluxum (or minidalton), clivarine and hibor.

Another embodiment of the invention is directed to a process for preparing decolorized enoxaparin from heparin comprising:
a) purification of the heparin by oxidation with about 4 % to about 10 % by weight relative to the heparin of at least one permanganate salt chosen from potassium permanganate, sodium permanganate, and quaternary ammonium permanganate, wherein oxidation occurs at a temperature ranging from approximately 35°C to approximately 90°C; and
b) depolymerization by a manufacturer other than one chosen from Aventis Pharma SA, its fully owned subsidiaries, and its successors and assigns, and agents of Aventis Pharma SA, its fully owned subsidiaries, and its successors and assigns, of the oxidized heparin according to a process to obtain said enoxaparin.

Additionally, another embodiment of the invention is directed to a process for preparing decolorized enoxaparin comprising:
depolymerization according to a process by a manufacturer other than one chosen from an Aventis company, its successors, and assigns, and agents of an Aventis company, its successors, and assigns, of heparin oxidized by about 4 % to about 10 % by weight relative to the heparin of at least one permanganate salt chosen from potassium permanganate, sodium permanganate, and quaternary ammonium permanganate, wherein oxidation occurs at a temperature ranging from approximately 35°C to approximately 90°C, to obtain said enoxaparin.

Additionally, heparin prepared according to the invention may in turn be used to prepare glycoserine-free, decolorized ULMWHs. Methods for preparing LMWH and ULMWH are disclosed, for example, in FR 2,440,376, U.S. Pat. No. 4,692,435, FR 2,453,875, Barrowcliffe, Thromb. Res. 12, 27-36 (1977), U.S. Pat. No. 4,401,758, EP 14184, EP 37319, EP 76279, EP 623629, FR 2,503,714, U.S. Pat. No. 4,804,652, WO 813276, EP 40144, U.S. Pat. No. 5,389,618, EP 287477, EP 347588, EP 380943, U.S. Pat. No. 4,533,549, U.S. Pat. No. 4,629,699, U.S. Pat. No. 4,791,195, U.S. Pat. No. 4,981,955, EP 380943, EP 347588, EP 64452, U.S. Pat. No. 4,396,762, EP 244235, EP 244236, U.S. Pat. No. 4,826,827, U.S. Pat. No. 3,766,167), EP 269981, U.S. Patent No. 4,303,651, U.S. Patent No. 4,757,057, and U.S. Published Patent Application No. 2002- 0055621 A1, all of which are incorporated herein for their disclosure of such methods, except that U.S. Pat. No. 5,389,618 is incorporated only as presently amended in the concurrent reissue proceeding.

Therefore, an additional subject of the invention is a glycoserine-free, decolorized LMWH and a process for preparing glycoserine-free, decolorized LMWH, exclusive of available LMWHs regulated by the USFDA as of the filing date of this application, comprising the following steps:
a) treatment of the heparin with from about 4 % to about 10 % relative to the weight of the heparin of at least one permanganate chosen from potassium permanganate, sodium permanganate, and quaternary ammonium permanganate, such as potassium permanganate, at a temperature ranging from approximately 35°C to approximately 90°C according to the process as described above;
b) purification of the glycoserine-free, decolorized heparin; and
c) depolymerization of the glycoserine-free, decolorized heparin to produce said glycoserine-free, decolorized LMWH

The structure below shows the permanganate cleavage points in heparin, demonstrating the mechanism of action of potassium permanganate during oxidation of the heparin molecules:

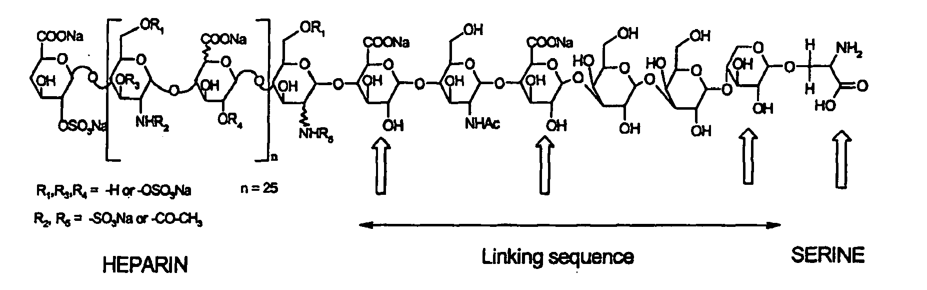

Without being limited to theory, it is believed that when heparin is treated according to the method of the invention, the permanganate salt acts on the vicinal diols of glucuronic acid, making it possible to selectively eliminate the serine residues. Although potassium permanganate is much more selective, sodium periodate also cleaves heparin at these sites (See H. E. Conrad, Heparin-Binding Proteins, 130, Academic Press (1998)). However, in contrast to reactions with permanganate, the reaction of sodium periodate with heparin degrades the ATIII site and results in an undesirable loss of anticoagulant activity. *Id.*

Treatment with potassium permanganate according to the invention also degrades the glycoserine amino acid to an acid, thereby eliminating the source of a component required for the heparin coloration reactions (Maillard reactions). The action of permanganate on heparin according to a method of the invention can be illustrated by the following reactions, which are not exhaustive:

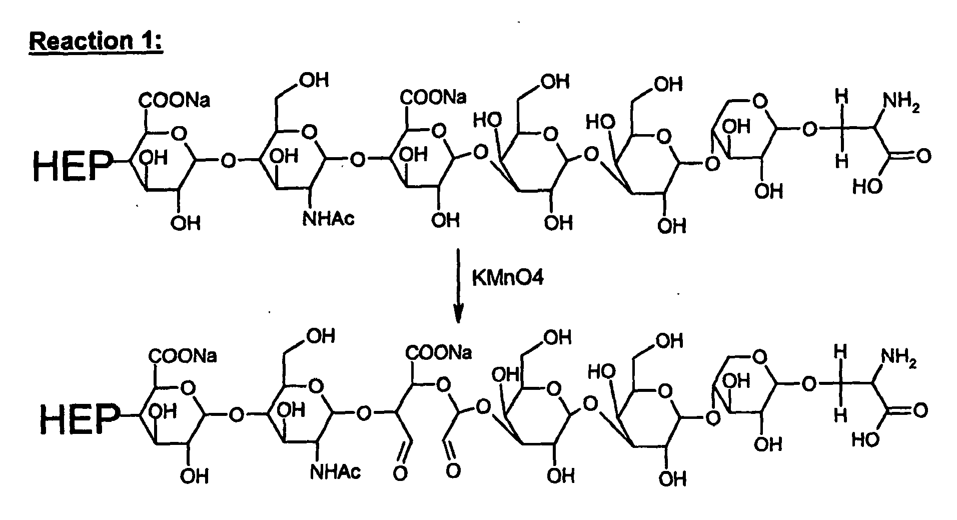

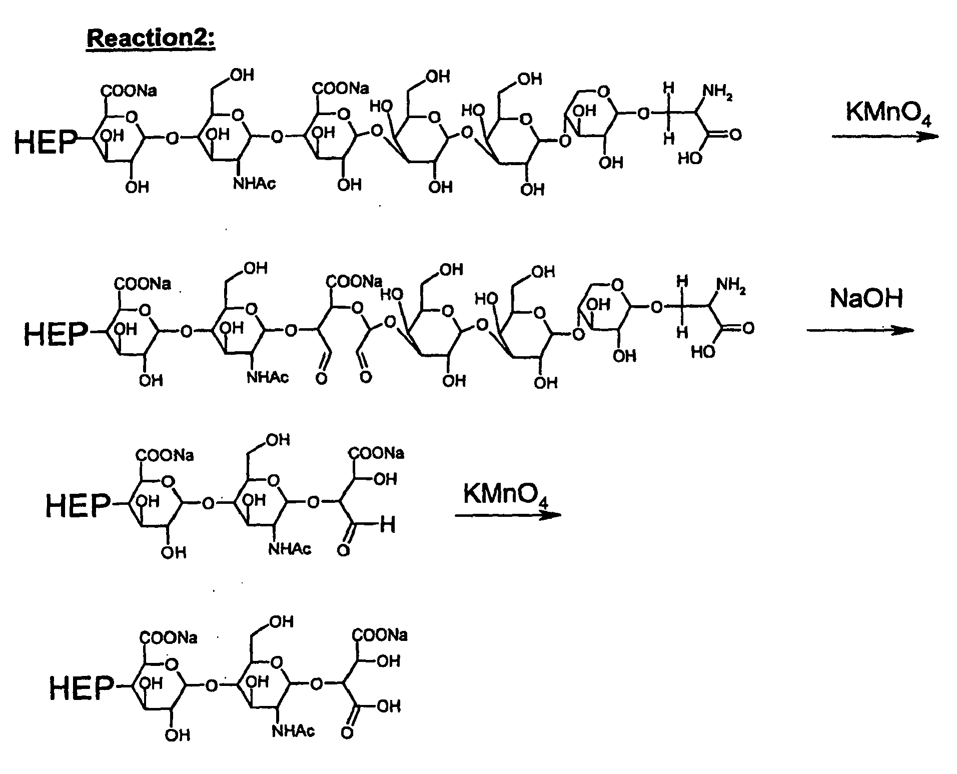

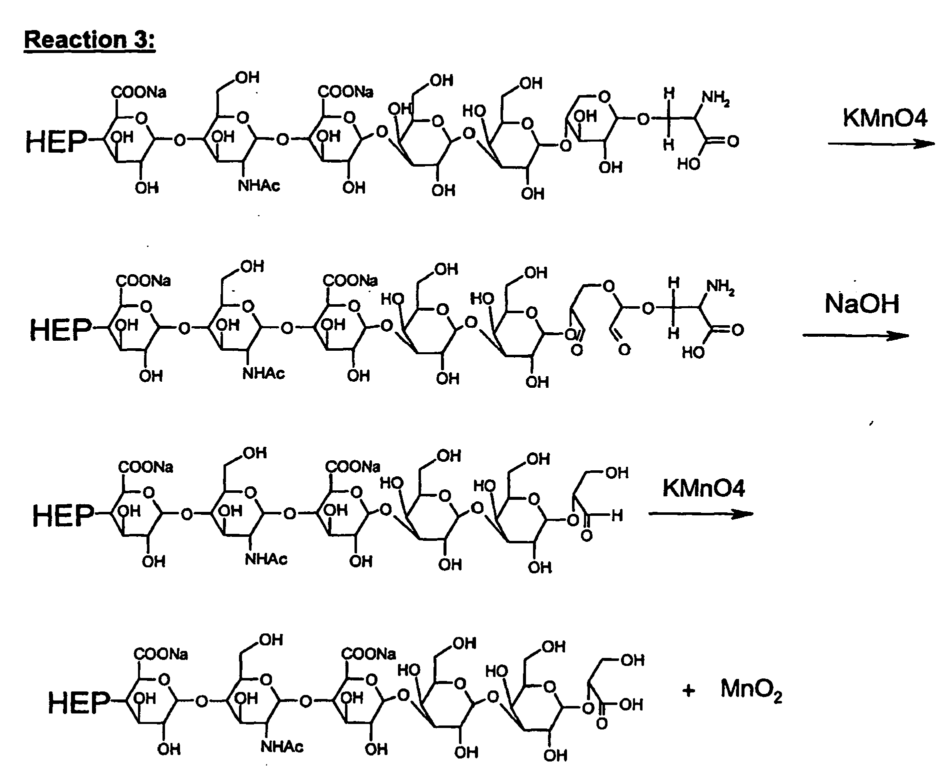

To identify the cleavage points, the general method is that heparin treated with, for example, potassium permanganate according to the invention is subjected to the action of heparinase III. This enzyme is highly specific for the non-sulfated regions of heparin. It selectively depolymerizes the disaccharide units containing uronic acid free of 2-O-sulfate and the domain for heparin binding to the protein (the protein that carries the heparin strands is a serine-glycine chain). Formation of the ΔIVa, ΔIVs disaccharides of the ΔIVa-Gal-Gal-Xyl-Ser component or of any oxidized derivative of this - linking region carrying the IVa disaccharide is mainly observed following digestion with heparinase III. This enzyme does not affect the remainder of the heparin chain. Consequently, the depolymerized material contains a mixture of heparin oligosaccharides (disaccharides to tetrasaccharides) and other polysaccharides. This mixture requires a pre-treatment to eliminate the heparin chains before it can be analyzed by High Performance Liquid Chromatography (HPLC). One skilled in the art will be familiar with a number of methods for eliminating heparin chains, including, for example, ultracentrifugation through a Millipore membrane (5 kDa) or methanol precipitation followed by centrifugation. The solution thus prepared can then be analyzed by HPLC. The following fragments can be identified by HPLC (porous graphite)/mass spectrometry coupling ("MM" means molecular mass):

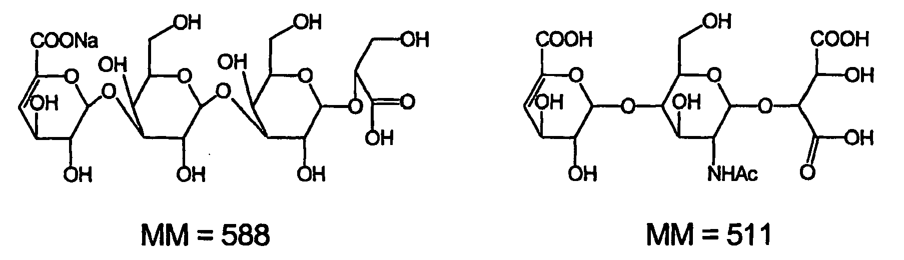

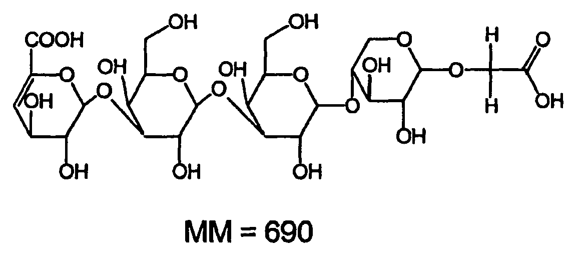

The structures of the tetrasaccharide MM=690 and of the trisaccharide MM=588 were confirmed by Nuclear Magnetic Resonance (NMR).

Those fragments demonstrate that treatment with potassium permanganate according to the invention selectively acts on the region of protein - linking and eliminates the serine residue. The compound MM=690 is the result of reaction 1 followed by enzyme digestion. The compound MM=511 is the result of reaction 2 followed by enzyme digestion. The compound MM=588 is the result of reaction 3 followed by enzyme digestion.

The foregoing compounds MM=511, MM=588 and MM=690 may be isolated and obtained in substantially pure form. As used herein, substantially pure" means sufficiently pure to identify the compounds by mass spectroscopy or NMR. In one embodiment, a substantially pure compound is one which is at least 80% pure. In another embodiment, a substantially pure compound is one which is at least 90% pure. In an aspect of the invention, a method is provided for determining the oligosaccharide content of a sample of a heparin or heparin product comprising depolymerizing the sample and analyzing the sample using a chromatography process to detect oligosaccharides chosen from MM=511, MM=588 and MM=690. In a related embodiment, the oligosachharide content is quantified by external or internal calibration. In another embodiment, the internal calibration comprises and internal standard. In a related embodiment, the internal standard is a substantially pure compound selected from MM=511, MM=588 and MM=690.

For structural indentification, utilizing HPLC, the tetrasaccharide characteristic of the binding linking domain (glycoserine) is isolated and identified by NMR (for example, a crude heparin can be selectively depolymerized by the action of heparinase III):

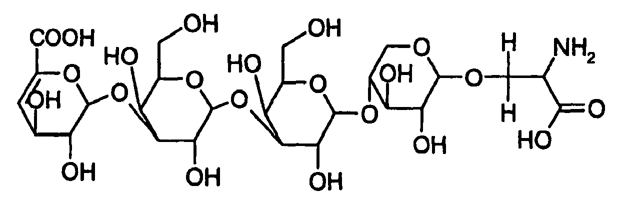

Yamada et al. has characterized this fragment by studying heparin depolymerization by heparinases in Yamada et al., J. BioL Chem. 270 (39): 22914 (1995); J. Biol. Chem. 267(3): 1528 (1992); Biochemistry, 38: 838 (1999).

Because coloration problems potentially impact the shelf-life of heparin, LMWH, and ULMWH preparations, and therefore require quality control during the manufacturing process, an additional subject of the invention is a method for analyzing such preparations in order to detect and/or quantify the presence of glycoserine and its oxidized derivatives. An embodiment of the method comprises the following steps:
a) depolymerization of the sample;
b) whether the sample is heparin or a heparin product, separation of the resulting oligosaccharides by HPLC; and
c) detection of oligosaccharides that contain glycoserine and/or its oxidized derivatives.

In one embodiment of the invention, depolymerization of the sample may be achieved through the action of a mixture of heparinases comprising, for example, heparinase 1 (EC 4.2.2.7.), heparinase 2 (heparin lyase II), and heparinase 3 (EC 4.2.2.8.), which are available from Grampian Enzymes. The enzymatic depolymerization may be carried out over a period of hours, which can be determined by one skilled in the art, at an appropriate temperature, which can also be determined by one skilled in the art. For example, the enzymatic depolymerization may be carried out for 48 hours at ambient temperature by mixing 20 µl of an aqueous solution containing 20 mg/ml of the heparin to be assayed, and 100 µl of a 100 mM acetic acid/NaOH solution, at pH 7.0, containing 2 mM of calcium acetate and 2 mg/ml of BSA, with 20 µl of a stock solution of comprising a mixture of heparinase 1, heparinase 2, and heparinase 3, comprising 0.5 units/ml of each heparinase 1, 2, and 3. One skilled in the art can readily adapt these exemplary conditions to different amounts of substrate and enzyme.

According to the method of the invention, the various polysaccharides and oligosaccharides present in a depolymerized sample are separated and quantified using methods known to those skilled in the art. For example, polysaccharides and oligosaccharides comprising glycoserine and its oxidized derivatives may be separated by HPLC using anion-exchange chromatography, for example, with a stationary phase grafted with quaternary ammonium derivatives such as -NMe₃⁺. The chromatography column may be filled with any of a variety of available resins, for example, of the Spherisorb SAX type with particle sizes in the range for example of 5 to 10 um.

The apparatus used may be any chromatograph that allows the formation of an elation gradient and that can utilize a UV detector. In one embodiment of the invention, the UV detector may be a diode array that can measure UV spectra for the constituents on at least two different wavelengths and record signals resulting from the difference between the absorbance at these different wavelengths. This allows specific detection of acetylated oligosaccharides. To allow this type of detection, mobile phases that are transparent to UV light up to 200 nm are preferable. Exemplary mobile phases may be based on perchlorate, methanesulfonate, or phosphate salts. And the pH of the mobile phase for the separation may be from about 2.0 to about 6.5. In one particular embodiment, the pH of the mobile phase is about 3. As nonacetylated polysaccharides all have, at a given pH, quite a similar UV spectrum, it is possible to selectively detect acetylated sugars by taking, as the signal, the difference between the absorbance at two wavelengths chosen such that the absorptivity of the nonacetylated saccharides is cancelled out.

Quantification of polysaccharides and oligosaccharides comprising glycoserine and its oxidized derivatives may be carried out using methods for external or internal calibration. In one embodiment of the invention, the internal standard used is 2-naphthol-3, 6-disulfonic acid. In this embodiment, the aqueous solution of heparin to be assayed contains about 0.15 g/l of 2-naphthol-3, 6-disulfonic acid. The depolymerized sample may be assayed by chromatography according to the method described in patent FR 0211724 filed September 23, 2002, which is incorporated by reference herein, and illustrated below for its specific application to the method for assaying for glycoserine content.

By way of example, possible conditions for chromatographic separation according to the invention are given below:
- 5 µm spherisorb SAX column, 25 cm in length, internal diameter 2.1 mm.
- Solvent A: 2.5 mM NaH₂PO₄ brought to pH 2.9 by addition of H₃PO₄.
- Solvent B: 1 N NaClO₄ - 2.5 mM NaH₂PO₄ brought to pH 3.0 by addition of H₃PO₄.

The elution gradient may be as follows:
- T = 0 min: % B = 3;
- T= 40 min: % B = 60; and
- T = 60 min: % B = 80.

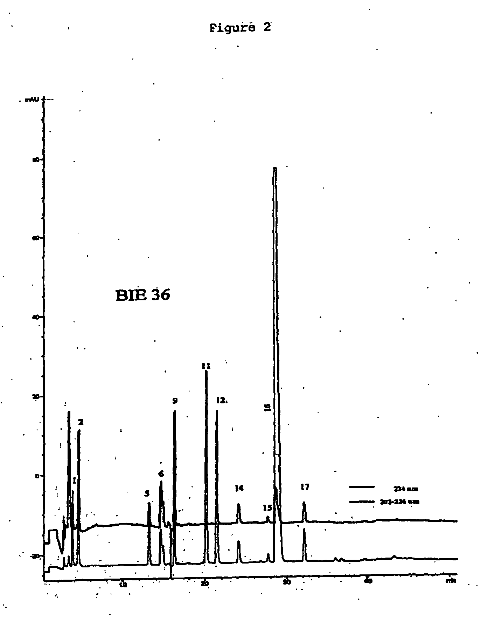

A chromatogram representative of the result of analyzing a depolymerized heparin material according to these exemplary conditions is shown in figure 2. In particular, a subject of the invention is the method of analysis as defined above, wherein the presence of tetrasaccharide characteristic of the linking domain (the glycoserine) is sought. This tetrasaccharide is:

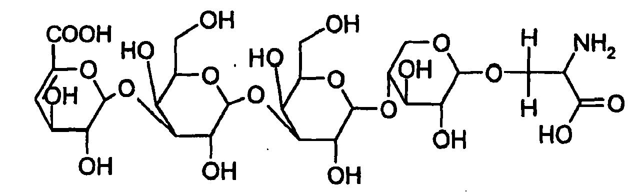

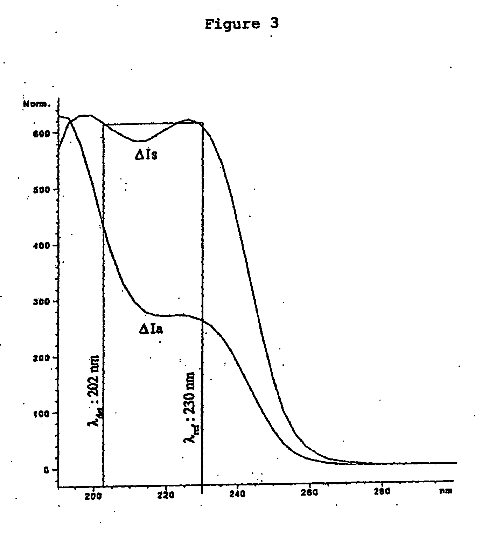

Another aspect of the invention is the method of detection utilized during chromatographic separation. In particular, a method has been developed in order to increase the specificity of the UV detection. As shown in figure 3, 202 nm and 240 nm will be chosen as detection and reference wavelength and the 202 - 240 nm signal will be noted. A suitable detector for this technique is the DAD 1100 detector from the company Agilent Technologies. In this case, a double detection will be carried out, firstly, at 234 nm and, secondly at 202-240 nm.

A subject of the present invention is also a method of analysis as defined above, using separation by anion-exchange chromatography, wherein the detection method makes it possible to selectively detect acetylated sugars.

A subject of the invention is also a method of analysis as defined above, using separation by exchange chromatography, wherein the selective detection of the acetylated sugars is carried out by taking, as the signal, the difference between the absorbance at two wavelengths chosen such that the absorptivity of the nonacetylated saccharides is cancelled out.

### Preparation for colorimetric analysis of the sample

A solution in water may be prepared so that the concentration is adjusted to 100 mg/ml, and the solution obtained is then filtered through a membrane filter with a porosity of 0.22 µm. The value of the absorbance at 400 nm is then measured. This measurement corresponds to the initial value for the study. The solution is distributed into seven bottles at a rate of approximately 5 ml per bottle. The samples are then set by being placed in an oven at 45°C. Each week, a bottle is taken out of the oven and the value of the absorbance at 400 nm is measured at 20°C. After 6 weeks, the suitability of the sample can be determined.

**Nomenclature of the saccharides and relation to the peaks according to the chromatogram in** **figure 2****:**
IdoA: a-L-idopyranosyluronic acid;
GlcA: β-D-glucopyranosyluronic acid;
AGlcA: 4,5-unsaturated acid: 4-deoxy-α-L-*threo*-hex-4-enepyranosyluronic acid;
Gal: D-galactose;
Xyl: xylose;
GlcNAc: 2-deoxy-2-acetamido-α-D-glucopyranose;
GlcNS: 2-deoxy-2-sulfamido-a-D-glucopyranose;
2S: 2-O-sulfate;
3S: 3-O-sulfate;.
6S: 6-O-sulfate;
1: ΔGlcAβ1-3 Gal β1-3 Gal β1-4 Xyl p1-O-Ser
2: (4-deoxy-α-L-threo-hexenepyranosyluronic acid)-(1→ 4)-2-deoxy-2-acetamido-α-D-glucopyranose, sodium salt;
5: (4-deoxy-α-L-threo-hexenepyranosyluronic acid)-(1→ 4)-2-deoxy-2-sulfamido-α-D-glucopyranose, disodium salt;
6: (4-deoxy-α-L-threo-hexenepyranosyluronic acid)-(1→4)-2-deoxy-2-acetamido-6-O-sulfo-α-D-glucopyranose, disodium salt;
9: (4-deoxy-2-O-sulfo-α-L-threo-hexenepyranosyluronic acid)-(1→ 4)-2-deoxy-2-acetamido-α-D-glucopyranose, disodium salt;
11: (4-deoxy-α-L-threo-hexenepyranosyluronic acid)-(1→ 4)-2-deoxy-2-sulfamido-6-O-sulfo-α-D-glucopyranose, trisodium salt;
12: (4-deoxy-2-O-sulfo-α-L-threo-hexenepyranosyluronic acid)-(1→ 4)-2-deoxy-2-sulfamido-α-D-glucopyranose, trisodium salt;
14: (4-deoxy-2-O-sulfo-α-L-threo-hexenepyranosyluronic acid)-(1→ 4)-2-deoxy-2-acetamido-6-O-sulfo-α-D-glucopyranose, trisodium salt;
15: (4-deoxy-α-L-threo-hexenepyranosyluronic acid)-(1→ 4)-2-deoxy-2-acetamido-6-O-sulfo-α-D-glucopyranosyl-(1→ 4)-(β-D-glucopyranosyluronic acid)-(1→ 4)-2-deoxy-2-su)famido-3-O-su)fo-α-D-glucopyranose, pentasodium salt;
16: (4-deoxy-2-O-sulfo-α-L-threo-hexenepyranosyluronic acid)-(1→ 4)-2-deoxy-2-sulfamido-6-O-sulfo-α-D-glucopyranose, tetrasodium salt;
17: (4-deoxy-α-L-threo-hexenepyranosyluronic acid)-(1→ 4)-2-deoxy-2-acetamido-6-O-sulfo-α-D-glucopyranosyl-(1→ 4)-(β-D-glucopyranosyluronic acid)-(1→ 4)-2-deoxy-2-sulfamido-3,6-di-O-sulfo-α-D-glucopyranose, hexasodium salt.
Thus, the method of the present invention includes a method for pre-treating the sample before it is analyzed and the chromatography process used for determining the presence or absence of the tetrasaccharide characteristic of the linking domain.

### EXAMPLES

In the following examples the abbreviation "NI" means internal normalization. Examples 6-11 demonstrate the influence of temperature and potassium permanganate concentration on the elimination of glycoserine residues from heparin.

### EXAMPLE 1: Preparation of "Upgraded" Heparin

This process increases the ahti-Xa activity of a crude heparin preparation and may be employed before using a heparin preparation in the process to remove glycoserine residues. The "upgraded" heparin prepared in this example was used in examples 2-10. And the initial anti-Xa activity of the crude heparin preparation used in this example is 150 IU/mg.

Five hundred and twenty milliliters of water and 112.5 g of NaCl (20% w/v) were introduced into a 2 L reactor. After dissolution, 60.0 g of crude heparin was added to the solution. After mechanical agitation for 30 minutes, the precipitate in suspension was filtered through a number 3 sintered glass funnel packed with 33.9 g of clarcel. The sintered glass filter was then rinsed with 120 ml of 20% (w/v) NaCl solution. The filtrate obtained (704 ml) was loaded into a 2 L reactor and methanol (388 ml) was rapidly poured in, in the presence of mechanical stirring. After stirring for approximately 2 hours at a temperature of about 20°C, the suspension was left to sediment overnight. The supernatant (804 ml) was removed and discarded and the sedimented precipitate was taken up in a 20 % NaCl solution (73.5 g of NaCl in 368 ml of water). After stirring for 30 minutes, 385 ml of methanol were rapidly added. After stirring for approximately 1 hour at a temperature of about 20°C, the suspension was left to sediment for approximately 12 hours. The supernatant (840 ml) was then removed and discarded and methanol (400 ml) was added to the sedimented precipitate. Again, after stirring for approximately 1 hour, the suspension was left to sediment for approximately 12 hours and the supernatant (430 ml) was removed and discarded. Methanol (400 ml) was added to the sedimented precipitate. After stirring this solution for 1 hour, the suspension was left to sediment for approximately 12 hours. After sedimentation, the suspended precipitate was filtered through a number 3 sintered glass funnel. The cake obtained was washed twice with 400 ml of methanol. The wet solid was filter-dried and then dried under reduced pressure (6 kPa), at a temperature of about 40°C. After drying, 43.7 g of "upgraded" heparin was obtained. The yield was 73 %.

Glycoserine residues are not affected by these treatments and the percentage of glycoserine in the sample (Nl%) was 2.4.

### EXAMPLE 2: "Upgraded" Heparin Oxidized With Potassium Permanganate and Depyrogenated

Twelve grams of "upgraded" heparin obtained as described in example 1 and 120 ml of distilled water were introduced into a 250 ml Erlenmeyer flask. The temperature of the mixture was adjusted to 40°C with magnetic stirring. The pH of the mixture was adjusted to 8.7 ± 0.3 by adding 1 N sodium hydroxide. The reaction medium was heated to 80°C and 0.96 g of solid KMnO₄ were added. After stirring for 15 minutes, the mixture was left to flocculate for 1 hour at 80°C. Carcel (1.2 g) was then added. After stirring for 15 minutes, the precipitate was collected by filtration through a number 3 sintered glass filter packed with 15 g of clarcel. The precipitate was washed with 25 ml of water at 60°C and then with 25 ml of water at 20°C. Then, the filtrate (180 ml) was placed in a 250 ml Erlenmeyer flask and 1.8 g NaCl was added to the filtrate in order to obtain a 1 % solution. The pH was adjusted to approximately 11.2 ± 0.3 by adding 1 N sodium hydroxide. The reaction medium was heated at 45°C for 2 hours, and was then left to stir slowly at about 20°C for approximately 12 hours. This solution was filtered through a number 3 sintered glass funnel and the funnel was washed with 15 ml of 20 % (w/v) NaCl solution. The filtrate was placed in a 250 ml Erlenmeyer flask, and 1.2 ml of a 30 % aqueous hydrogen peroxide solution was added. The reaction medium was left to stir slowly at about 20°C for approximately 12 hours. The pH was adjusted to 6.2 ± 0.3 by adding a 6N HCl solution and the NaCl concentration was adjusted to 3%. This solution was filtered through a membrane with a porosity of 1 µm and the membrane was washed with 5 ml of water. The filtrate (204 ml) gathered from this filtration was placed in a 500 ml Erlenmeyer flask and methanol (163 ml) was added rapidly in the presence of magnetic stirring. After vigorous stirring for 30 minutes, the suspension was left to sediment for approximately 12 hours. The supernatant (295 ml) was then removed and discarded and methanol (70 ml) was added to the sedimented precipitate. After stirring for approximately 30 minutes, the suspension was left to sediment for 3 hours. Then supernatant (80 ml) was removed and discarded and methanol (60 ml) was added to the sedimented precipitate. After stirring for 30 minutes, the suspension was left to sediment for approximately 12 hours. The precipitate in suspension was filtered through a number 3 sintered glass funnel. The cake obtained from this filtration was washed with two portions of 25 ml of methanol. The wet solid was filter-dried and then dried under reduced pressure (6 kPa), at a temperature of about 40°C. After drying, 10.33 g of "purified" heparin were obtained. The yield obtained was 86.1 %.

The composition obtained had the following characteristics:
NI% Glycoserine.= 0
Anti-Xa activity = 203.5 IU/mg

### EXAMPLE 3: "Upgraded" Heparin Without Oxidation and With Depyrogenation

Twelve grams of "upgraded" heparin obtained as described in example 1 and 120 ml of distilled water were introduced into a 250 ml Erlenmeyer flask. NaCl (1.21 g) was added in order to obtain a 1 % solution. The pH was adjusted to approximately 11.2 ± 0.3 by adding 1 N sodium hydroxide. The reaction medium was heated at 45°C for 2 hours, and was then left to stir slowly at a temperature of about 20°C for approximately 12 hours. The solution was filtered through a number 3 sintered glass funnel and the funnel was washed with 10 ml of 20 % (w/v) NaCl solution. The filtrate obtained was placed into a 250 ml Erlenmeyer flask, and 1.2 ml of a 30 % aqueous hydrogen peroxide solution were added. The reaction medium was stirred slowly at a temperature of about 20°C for 12 hours. The pH was adjusted to 6.2 ± 0.3 by adding a 6N HCl solution and the NaCl concentration was adjusted to 3 %. This solution was filtered through a membrane with a porosity of 1 µm. The filtrate (138 ml) was placed in a 250 ml Erlenmeyer flask and methanol (110 ml) was added rapidly in the presence magnetic stirring. After stirring for 30 minutes, the suspension was left to sediment for approximately 12 hours. The supernatant (195 ml) was then removed and discarded and methanol (55 ml) was added to the sedimented precipitate. After stirring for approximately 30 minutes, the suspension was left to sediment for approximately 1 hour. The supernatant (57 ml) was again removed and discarded. Methanol (55 ml) was added to the sedimented precipitate. After stirring for 30 minutes, the suspension was left to sediment for approximately 12 hours. The precipitate was then collected by filtration through a number 3 sintered glass funnel and the cake obtained was washed with 2 portions of 25 ml of methanol. The wet solid was filter-dried and then dried under reduced pressure (6 kPa), at a temperature of about 40°C. After drying, 11.12 g of "purified" heparin was obtained. The yield obtained was 92.7 %.

The composition obtained had the following characteristics:
Nl% Glycoserine= 2.4
Anti-Xa activity= 203.7 IU/mg

### EXAMPLE 4 : "Upgraded" Heparin Without Oxidation and Without Depyrogenation

12 g of "upgraded" heparin obtained as described in example 1 and 120 ml of distilled water were introduced into a 250 ml Erlenmeyer flask. The pH was brought to approximately 11.2 ± 0.3 by adding 1 N sodium hydroxide, and 1.2 ml of an aqueous hydrogen peroxide solution were added. The reaction medium was left to stir slowly at a temperature in the region of 20°C for 12 hours. The pH was brought back to 6.2 ± 0.3 by adding 6N HCl solution and the NaCl titer was adjusted to 3 %. This solution was filtered through a membrane with a porosity of 1 µm and was washed with 2 ml of water. The filtrate obtained (133 ml) was placed in a 500 ml Erlenmeyer flask and methanol (106 ml) was added rapidly thereto in the presence of magnetic stirring. After stirring for 30 minutes, the suspension was left to sediment until the following day. The supernatant was then removed and discarded (190 ml) and 50 ml of methanol were added to the sedimented precipitate. After stirring for approximately 30 minutes, the suspension was left to sediment for 4 hours. The supernatant was again removed and then discarded (48 ml) and 50 ml of methanol were added to the sedimented precipitate. After stirring for 30 minutes, the suspension was then left to sediment for approximately 12 hours. After sedimentation, the precipitate in suspension was filtered through a number 3 sintered glass funnel. The cake obtained was then washed with two portions of 25 ml of methanol. The wet solid was filter-dried and then dried under reduced pressure (6 kPa), at a temperature in the region of 40°C. After drying, 10.48 g of "purified" heparin were obtained. The yield obtained was 87.35 %.

The composition obtained had the following characteristics:
Nl% Glycoserine = 2.4
Anti-Xa activity= 209.5 IU/mg

### EXAMPLE 5: "Upgraded" Heparin With Oxidation and Without Depyrogenation

12 g of "upgraded" heparin obtained according to example 1 and 120 ml of distilled water were introduced into a 250 ml Erlenmeyer flask. The mixture was brought to 40°C in the presence of magnetic stirring. The pH was brought to 8.7 ± 0.3 by adding 1N sodium hydroxide. The reaction medium was heated to about 80°C and 0.96 g of solid KMnO₄ were added to the reaction medium. After stirring for 15 minutes, the mixture was left to flocculate for 1 hour at 80°C. 1.2 g of clarcel was then added. After stirring for 15 minutes, the precipitate in suspension was filtered through a number 3 sintered glass funnel packed with 15 g of clarcel. This was successively washed with 25 ml of water at 60°C and then with 25 ml of water at 20°C. The filtrate (178 ml) was placed in a 250 ml Erlenmeyer flask and 1.2 ml of a 30% aqueous hydrogen peroxide solution was added thereto. The reaction mixture was left to stir slowly at a temperature in the region of 20°C for 12 hours. The pH was brought back to 6.2 ± 0.3 by adding a 6N HCl solution and the NaCl titer was adjusted to 3 %. This solution was then filtered through a membrane with a porosity of 1 µm and washed with 2 ml of water. The filtrate obtained (192 ml) was placed in a 500 ml Erlenmeyer flask and 154 ml of methanol were rapidly added thereto, in the presence of magnetic stirring. After stirring for 30 minutes, the suspension was left to sediment until the following day. The supernatant was then removed and discarded (283 ml) and 60 ml of methanol were added to the precipitated sediment. After stirring for approximately 30 minutes, the suspension was left to sediment for 4 hours. The supernatant was again removed and discarded (58 ml) and another 60 ml of methanol were added to the sedimented precipitate. After stirring for 30 minutes, the suspension was left to sediment for approximately 12 hours. The precipitate in suspension was filtered through a number 3 sintered glass funnel. The cake obtained was then washed with two portions of 25 ml of methanol. The wet solid was filter-dried and then dried under reduced pressure (6 kPa), at a temperature in the region of 40°C. After drying, 10.31 g of "purified" heparin were obtained. The yield obtained was 85.9%.

The composition obtained had the following characteristics:
Nl% Glycoserine= 0
Anti-Xa activity = 210.3 IU/mg

### EXAMPLE 6: "Upgraded" Heparin Oxidized in 8% KMnO₄ at 80°C

10 g of "upgraded" heparin obtained according to example 1 and 100 ml of distilled water were introduced into a 250 ml Erlenmeyer flask. The mixture was brought to 40°C in the presence of magnetic stirring. The pH was brought to 8.7 ± 0.3 by adding 1 N sodium hydroxide. The reaction medium was heated to 80°C and 0.80 g of solid KMnO4 were added to it. After stirring for 15 minutes, the mixture was left to flocculate for 1 hour at 80°C. 1.0 g of clarcel was then added. After stirring for 15 minutes the precipitate in suspension was filtered through a number 3 sintered glass funnel packed with 15 g of clarcel. This was successively washed with 25 ml of water at 60°C and then with 25 ml of water at 20°C. The filtrate obtained (152 ml) was placed in a 250 ml Erlenmeyer flask and 1.5 g of NaCl were added thereto in order to obtain a 1 % solution. The pH was brought to approximately 11 ± 0.3 by adding 1 N sodium hydroxide. The reaction medium was heated to approximately 45°C for 2 hours, and was then left to stir slowly at a temperature in the region of 20°C for 12 hours. The solution was filtered through a number 3 sintered glass funnel. The filtrate obtained was introduced into a 250 ml Erlenmeyer flask, and 1.0 ml of a 30 % aqueous hydrogen peroxide solution were added thereto. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm and half the filtrate (70 ml) was placed in a 250 ml Erlenmeyer flask and 56 ml of methanol were added rapidly thereto, in the presence of magnetic stirring. After stirring for 30 minutes, the mixture was left to sediment. The supernatant was removed and then discarded (118 ml) and 60 ml of methanol were added to the sedimented precipitate. After stirring for 30 minutes, the suspension was left to sediment for approximately 12 hours. The supernatant was then removed and discarded (54 ml) and 50 ml of Methanol were added to the sedimented precipitate. After stirring for approximately 30 minutes, the suspension was left to sediment for approximately 12 hours. The precipitate in suspension was filtered through a number 3 sintered glass funnel. The cake obtained was then washed with two portions of 25 ml of methanol. The wet solid was filter-dried and then dried under reduced pressure (6kPa), at a temperature in the region of 40°C. After drying, 2.80 g of "purified" heparin were obtained. The yield obtained was 63.3 %.

The composition obtained had the following characteristics:
Nl% Glycoserine = 0.0

### EXAMPLE 7: "Upgraded" Heparin Oxidized in 4% KMnO₄ at 80°C

10 g of "upgraded" heparin obtained according to example 1 and 100 ml of distilled water were introduced into a 250 ml Erlenmeyer flask. The mixture was brought to 40°C in the presence of magnetic stirring. The pH was brought to 8.7 ± 0.3 by adding 1N sodium hydroxide. The reaction medium was heated to 80°C and 0.40 g of solid KMnO₄ were added thereto. After stirring for 15 minutes, the mixture was left to flocculate for 1 hour at 80°C. 1.0 g of clarcel was added thereto. After stirring for 15 minutes, the precipitate in suspension was filtered through a number 3 sintered glass funnel packed with 15 g of clarcel. This was successively washed with 25 ml of water at 60°C and then with 25 ml of water at 20°C. The filtrate obtained (158 ml) was placed in a 250 ml Erlenmeyer flask and 1.6 g of NaCl were added thereto in order to obtain a 1 % solution. The pH was brought to approximately 11 ± 0.3 by adding 1 N sodium hydroxide. The reaction medium was heated to 45°C for 2 hours, and was then left to stir slowly at a temperature in the region of 20°C for 12 hours. The solution was filtered through a number 3 sintered glass funnel. The filtrate was again introduced into a 250 ml Erlenmeyer flask, and 1.0 ml of a 30 % aqueous hydrogen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm. The filtrate (152 ml) was placed in a 500 ml Erlenmeyer flask and 122 ml of methanol were added rapidly thereto, in the presence of magnetic stirring. The supernatant was removed and discarded (251 ml) and 100 ml of methanol were added to the sedimented precipitate. After stirring for 30 minutes, the suspension was left to sediment for approximately 12 hours. The supernatant was then removed and discarded (97 ml) and 100 ml of methanol were added to the sedimented precipitate. After stirring for approximately 30 minutes, the suspension was left to sediment for approximately 12 hours. The precipitate in suspension was filtered through a number 3 sintered glass funnel. The cake obtained was then washed with two portions of 30 ml of methanol. The wet solid was filter dried and then dried under reduced pressure (6 kPa), at a temperature in the region of 40°C. After drying, 6.4 g of "purified" heparin were obtained. The yield obtained was 71 %.

The composition obtained had the following characteristics:
Nl% Glycoserine = 0.0

### EXAMPLE 8: "Upgraded" Heparin Oxidized in 8 % of KMnO₄ at 40°C

10 g of "upgraded" heparin obtained according to example 1 and 100 ml of distilled water were introduced into a 250 ml Erlenmeyer flask. The mixture was brought to 40°C in the presence of magnetic stirring. The pH was brought to 8.7 ± 0.3 by adding 1 N sodium hydroxide. The reaction medium was then heated to 40°C and 0.80 g of solid KMnO₄ were added thereto. After stirring for 15 minutes, the mixture was left to flocculate for 1 hour at 80°C. 1.0 g of clarcel was added thereto. After stirring for 15 minutes, the precipitate in suspension was filtered through a number 3 sintered glass funnel packed with 15 g of clarcel. This was sequentially rinsed with 25 ml of water at 60°C and then 25 ml of water at 20°C. The filtrate obtained (142 ml) was placed in a 250 ml Erlenmeyer flask and 1.42 g of NaCl were added in order to obtain a 1 % solution. The pH was brought to approximately 11 ± 0.3 by adding 1N sodium hydroxide. The reaction medium was heated at 45°C for 2 hours, and then left to stir slowly at a temperature in the region of 20°C for 12 hours. The solution was then filtered through a number 3 sintered glass funnel. The filtrate was again introduced into a 250 ml Erlenmeyer flask, and 1.0 ml of a 30 % aqueous hydrogen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm and half the filtrate (80 ml) was placed in a 250 ml Erlenmeyer flask. 64 ml of methanol were added rapidly thereto, in the presence of magnetic stirring. After stirring for approximately 30 minutes, the suspension was left to sediment. The supernatant was removed and then discarded (131 ml) and 60 ml of methanol were added to the sedimented precipitate. After stirring for approximately 30 minutes, the suspension was left to sediment for approximately 12 hours. The supernatant was the removed and discarded (52 ml) and 50 ml of methanol were added to the sedimented precipitate. The suspension was filtered through a number 3 sintered glass funnel. The cake obtained was then washed with two portions of 25 ml of methanol. The wet solid was filter-dried and then dried under reduced pressure (6 kPa), at a temperature in the region of 40°C. After drying, 2.3 g of "purified" heparin were obtained. The yield obtained was 54 %.

The composition obtained had the following characteristics:
Nl% Glycoserine=0.0

### EXAMPLE 9: "Up-ciraded" Heparin Oxidized With 8% KMn04 at 60°C

10 g of "upgraded" heparin obtained according to example 1 and 100 ml of distilled water were introduced into a 250 ml Erlenmeyer flask. The mixtures was brought to 40°C with magnetic stirring. The pH was brought to 8.7 ± 0.3 by adding 1 N sodium hydroxide. The reaction medium was heated to 60°C and 0.80 g of solid KMnO4 were added thereto. After stirring for 15 minutes, the mixture was left to flocculate for 1 hour at 80°C. 1.0 g of clarcel was then added. After stirring for 15 minutes, the precipitate in suspension was filtered through a sintered glass funnel 3 packed with 15 g of clarcel. This was then rinsed with 25 ml of water at 60°C and then 25 ml of water at 20°C. The filtrate obtained (150 ml) was placed in a 250 ml Erlenmeyer flask. 1.5 g of NaCl were added in order to obtain a 1 % solution. The pH was brought to approximately 11 ± 0.3 by adding 1 N sodium hydroxide. The reaction medium was heated at 45°C for 2 hours, and was then left to stir slowly at a temperature in the region of 20°C for 12 hours. The solution was filtered through a number 3 sintered glass funnel. The filtrate was again introduced into a 250 ml Erlenmeyer flask, and 1.0 ml of a 30 % aqueous oxygen peroxide solution was added. The reaction medium was left to stir slowly at a temperature in the region of 20°C for 12 hours. The pH was brought back to 6.2 ± 0.3 with a 6N HCI solution and the NaCl titer was adjusted to 3 %. This solution was filtered through a membrane with a porosity of 1 µm and half the filtrate (70 ml) was placed in a 250.ml Erlenmeyer flask. 56 ml of methanol were added rapidly thereto, in the presence of magnetic stirring. The supernatant was then removed and discarded (118 ml) and 60 ml of methanol were added to the sedimented precipitate. After stirring for approximately 30 minutes, the mixture was left to sediment for approximately 12 hours. The supernatant was then removed and discarded (54 ml) and 50 ml of methanol were added to the sedimented precipitate. The suspension was filtered through a number 3 sintered glass funnel. The cake obtained was then washed with two portions of 25 ml of methanol. The wet solid was filter-dried and then dried under reduced pressure (6 kPa), at a temperature in the region of 40°C. After drying, 3.12 g of "purified" heparin were obtained. The yield obtained was 68 %.

The composition obtained had the following characteristics:
Nl% Glycoserine = 0.0

### EXAMPLE 10: "Upgraded" Heparin Oxidized in 2% KMnO4 at 80°C

10 g of "upgraded" heparin obtained above and 100 ml of distilled water were introduced into a 250 ml Erlenmeyer flask. The mixture was brought to 40°C in the presence of magnetic stirring. The pH was brought to 8.7 ± 0.3 by adding 1 N sodium hydroxide. The reaction medium was heated to 80°C and 0.16 g of solid KMnO4 were added thereto. After stirring for 15 minutes, the mixture was left to flocculate for 1 hour at 80°C. 1.0 g of clarcel was then added. After stirring for 15 minutes, the precipitate in suspension was filtered through a number 3 sintered glass funnel packed with 15 g of clarcel. This was then rinsed with 25 ml of water at 40°C and then 25 ml of water at 20°C. The filtrate (114 ml) was placed in a 250 ml Erlenmeyer flask. 1.14 g of NaCl were added in order to obtain a 1 % solution. The pH was brought to approximately 11 ± 0.3 by adding 1N sodium hydroxide. The reaction medium was heated at 45°C for 2 hours, and was then left to stir slowly at a temperature in the region of 20°C for 12 hours. The solution was filtered through .a number 3 sintered glass funnel. The filtrate was again introduced into a 250 ml Erlenmeyer flask, and 0.8 ml of a 30 % aqueous hydrogen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm and half the filtrate (75 ml) was placed in a 250 ml Erlenmeyer flask. 60 ml of methanol were added rapidly, in the presence of magnetic stirring. After stirring for approximately 30 minutes, the mixture was left to sediment. The supernatant was removed and then discarded (120 ml) and 50 ml of methanol are added to the sedimented precipitate. After stirring for approximately 30 minutes, the mixture was left to sediment. The supernatant was then removed and discarded (38 ml) and 40 ml of methanol were added to the sedimented precipitate. After stirring for approximately 30 minutes, the suspension was left to sediment. The supernatant was then removed and discarded (27 ml) and 30 ml of methanol were added to the sedimented precipitate. The suspension was filtered through a number 3 sintered glass funnel. The cake obtained was then washed with two portions of 25 ml of methanol. The wet solid was filter dried and then dried under reduced pressure (6 kPa) at a temperature in the region of 40°C. After drying, 2.61 g of "purified" heparin were obtained. The yield obtained was 72 %.

The composition obtained had the following characteristics:
Nl% Glycoserine= 0.8

### EXAMPLE 11: "Upgraded" Heparin Oxidized in 2% KMnO4 at 60°C

10 g of "upgraded" heparin obtained according to example 1 and 100 ml of distilled water were introduced into a 250 ml Erlenmeyer flask. The mixture was brought to 40°C in the presence of magnetic stirring. The pH was brought to 8.7 ± 0.3 by adding 1 N sodium hydroxide. The reaction medium was heated to 60°C and 0.16 g of solid KMnO4 were added thereto. After stirring for 15 minutes, the mixture was left to flocculate for 1 hour at 60°C. 1.0 g of clarcel was then added. After stirring for 15 minutes, the precipitate in suspension was filtered through a number 3 sintered glass funnel packed with 15 g of clarcel. This was then rinsed with two portions of 20 ml of water at 40°C. The filtrate (129 ml) was placed in a 250 ml Erlenmeyer flask. 1.29 g of NaCl were added thereto in order to obtain a 1 % solution. The pH was brought to approximately 11 ± 0.3 by adding 1N sodium hydroxide. The reaction medium was heated at 45°C for 2 hours, and was then left to stir slowly at a temperature in the region of 20°C for 12 hours. The solution was filtered through a number 3 sintered glass funnel. The filtrate was again introduced into a 250 ml Erlenmeyer flask, and 0.8 ml of a 30 % aqueous hydrogen peroxide solution was added. The reaction medium was left to stir slowly at a temperature in the region of 20°C for 12 hours. The pH was brought back to 6.2 ± 0.3 with a 6N HCl solution and the NaCl titer was adjusted to 3 %. This solution was filtered through a membrane with a porosity of 1 µm and half the filtrate (75 ml) was placed in a 250 ml Erlenmeyer flask. 60 ml of methanol were added rapidly thereto, in the presence of magnetic stirring. The supernatant was removed and then discarded (120 ml) and 50 ml of methanol were added to the sedimented precipitate. After stirring for approximately 30 minutes, the mixture was left to sediment. The supernatant was then removed and then discarded (32 ml) and 30 ml of methanol were added to the sedimented precipitate. After stirring for approximately 30 minutes, the mixture was left to sediment. The supernatant was then removed and discarded (26 ml) and 30 ml of methanol were added to the sedimented precipitate. The suspension is filtered through a number 3 sintered glass funnel. The cake obtained was then washed with two times 25 ml of methanol. The wet solid was filter-dried and then dried under reduced pressure (6 kPa), at a temperature in the region of 40°C. After drying, 2.24 g of "purified" heparin were obtained. The yield obtained was 62 %.

The composition obtained had the following characteristics:
Nl% Glycoserine= 0.9

**Table 1: Anti-Xa Activity of the Heparins Obtained With or Without Treatment With KmnO₄**

| ***Assay*** | ***Yield*** | ***aXa IU*/*mg*** | ***aXa USP*/*mg*** | ***Comments*** |
|---|---|---|---|---|
| Example 2 | 86.1 % | 203.5 | 190.5 | KMnO₄ treatment: yes |
| | | | | Depyrogenation: yes |
| Example 3 | 92.7 % | 203.7 | 186.8 | KMnO₄ treatment: no |
| | | | | Depyrogenation: yes |
| Example 4 | 87.3 % | 209.5 | 191 | KMnO₄ treatment: no |
| | | | | Depyrogenation: no |
| Example 5 | 85.9 % | 210.3 | 176.2 | KMnO₄ treatment: yes |
| | | | | Depyrogenation: no |

## Claims

1. A method for determining the glycoserine content of a sample of a heparin or a heparin product comprising:
a) depolymerizing the sample with at least one heparinase; and
b) analyzing the sample using a chromatography process to detect the presence or absence of glycoserine and/or oxidized glycoserine residues in the sample,
wherein said chromatography process detects acetylated groups.

2. The method according to claim 1, wherein said at least one heparinase is selected from heparinase 1, heparinase 2, and heparinase 3.

3. The method according to claim 1 or claim 2, wherein the sample is depolymerized with a mixture of heparinases comprising heparinase 1, heparinase 2, and heparinase 3.

4. The method according to any of claims 1 to 3, wherein said chromatography process comprises anion exchange chromatography.

5. The method according to claim 4, wherein said chromatography process comprises strong anion exchange chromatography (SAX).

6. The method according to claim 5, wherein the strong anion exchange chromatography comprises a solid support functionalized with quaternary ammonium exchange groups.

7. The method according to claim 5, wherein the stationary phase is grafted with quaternary ammonium derivatives, which comprise -NMe3+.

8. The method according to claim 5, wherein said chromatography process comprises CTA-SAX chromatography.

9. The method according to claim 4, wherein the mobile phase for anion-exchange chromatography is transparent to ultraviolet (UV) light with wavelengths from about 200 nm to about 400 nm.

10. The method according to claim 9, wherein said mobile phase comprises sodium perchlorate, methanesulfonate salts, or phosphate salts.

11. The method according to claim 1, further comprising a method for detecting polysaccharides following said chromatography process.

12. The method according to claim 11, wherein said polysaccharides are detected by UV absorption.

13. The method according to claim 12, wherein the UV absorption is measured at least two wavelengths chosen so that the absorption signals of non-acetylated polysaccharides cancel out.

14. The method according to claim 13, wherein the at least two wavelengths include 202 nm and 240 nm.

15. The method according to claim 10, wherein the glycoserine content is quantified by external or internal calibration.

16. The method according to claim 27, wherein the internal calibration comprises the use of an internal standard.

17. The method according to claim28, wherein the internal standard is 2-naphthol-3, 6-disulfonic acid.

18. The method of claim 28, wherein the internal standard is about 0.15 g/l of 2-naphthol-3, 6-disulfonic acid.

19. The method of c!a!m10, wherein said chromatography process comprises detecting a tetrasaccharide of the glycoserine- linking domain of heparin having the following structure

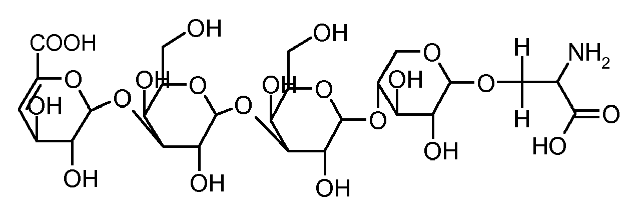

20. The method of claim 21, wherein the pH of the mobile phase ranges from about 2.0 to about 6.5.

21. The method of claim 32, wherein the pH of the mobile phase is about 3.

22. A method for analyzing a sample of a heparin product in order to detect and/or quantify glycoserine and/or oxidized derivatives of glycoserine in said sample comprising:
a) depolymerizing the sample;
b) separating the oligosaccharides in the sample by high pressure liquid chromatography;
c) detecting and/or quantifying oligosaccharides that contain glycoserine and/or oxidized derivatives of glycoserine.
